# EUROPÄISCHE PATENTSCHRIFT

(11) **EP 1 637 365 B1**
(45) Veröffentlichungstag und Bekanntmachung des Hinweises auf die Patenterteilung: **23.04.2008**
(21) Anmeldenummer: 05107568.7
(22) Anmeldetag: 17.08.2005
(51) Int. Cl.: B60G 3/18, B60G 3/20, B60G 3/26

(54) **System zum Erzeugen von Lenkwinkeln**
System for generating steering angles
Système pour générer des angles de braquage

(30) Priorität: 10.09.2004 DE 102004044323
(43) Veröffentlichungstag der Anmeldung: 22.03.2006
(73) Patentinhaber: Bayerische Motoren Werke Aktiengesellschaft, 80809 München (DE)
(72) Erfinder: Pruckner, Alfred, 81545, München (DE)

(56) Entgegenhaltungen:
- DE-A1- 2 020 009
- DE-A1- 3 736 452
- DE-A1- 4 205 366
- DE-A1- 19 857 394
- DE-A1- 19 963 855

## Beschreibung

Die Erfindung betrifft ein System zum Erzeugen von Lenkwinkeln an zumindest geringfügig lenkbaren Rädern eines zweispurigen Fahrzeugs, die über eine Einzelradaufhängung, welche bei Einfedervorgängen des Rades gegenüber dem Fahrzeug-Aufbau eine Änderung der Spurweite verursacht, geführt sind. Ein solches System ist aus der gattungsgemäßen DE 198 57 394 A bekannt. Zum technischen Umfeld wird daneben auf die DE 199 63 855 A1 sowie auf die DE 41 15 481 C2 verwiesen.

Üblicherweise werden Einzelradaufhängungen von zweispurigen Kraftfahrzeugen, insbesondere Personenkraftwagen, derart ausgelegt, dass sich verschiedene, die Fahrdynamik beeinflussende Größen (z.B. Spurverlauf, Reifensturz, Rollachse, ...) mit dem Einfederweg verändern. Dies wird durch eine definierte kinematische bzw. elastokinematische Auslegung erreicht. Unter dem Begriff "Einfedern" wird dabei jegliche Relativbewegung im wesentlichen in Vertikalrichtung zwischen dem Fahrzeug-Aufbau und dem jeweiligen Rad, auf welchem der Fzg.-Aufbau über eine Tragfeder oder dgl. abgestützt ist, verstanden, also ausdrücklich auch die einer Kompression der Tragfeder und somit einer Verringerung des Abstands zwischen Rad und Aufbau entgegen gerichtete "Ausfeder-Bewegung", die eine Erhöhung des vertikalen Abstands zwischen Rad und Aufbau zur Folge hat.

Bei der Auslegung des Fahrwerks eines (Kraft-)Fahrzeugs müssen grundsätzlich Kompromisse bezüglich Fahrdynamik und Komfort eingegangen werden. Eigentlich wäre es erwünscht, die sog. Rollachse (oder Wankachse) des Fahrzeugs möglichst hoch zu legen, um ein Wanken des Fzg.-Aufbaus bei Kurvenfahrt zu minimieren, andererseits soll diese Rollachse möglichst tief liegen, um Spurweitenänderungen, die sich bekanntlich bei Einfedervorgängen einstellen, zu minimieren. Heutzutage werden Fahrzeuge mit niedriger Rollachse ausgelegt und ein daraus resultierendes Wankverhalten wird entweder über entsprechend harte Tragfedern in Grenzen gehalten, was jedoch wenig komfortorientiert ist, oder es wird versucht, mittels aktiver Wankstabilisierungssysteme sich einstellende Winkwinkel auszugleichen, was jedoch aufwändig ist. Würde man hingegen eine höher liegende Rollachse verwirklichen, wobei die Rollachse bevorzugt durch den Schwerpunkt des Fahrzeug-Aufbaus verläuft, so wäre (zumindest im wesentlichen) Wankfreiheit während einer Kurvenfahrt ohne jeglichen Zusatzaufwand erreichbar. Nachteilig sind dann jedoch die sich aufgrund der hoch liegenden Rollachse mit üblicher Aufhängungsgeometrie einstellenden Spurweitenänderungen während des Einfederns (bzw. Ausfederns), die Schräglaufwinkel am Rad erzeugen, was wiederum Querkräfte aufgrund dieser Vertikalbewegungen generiert.

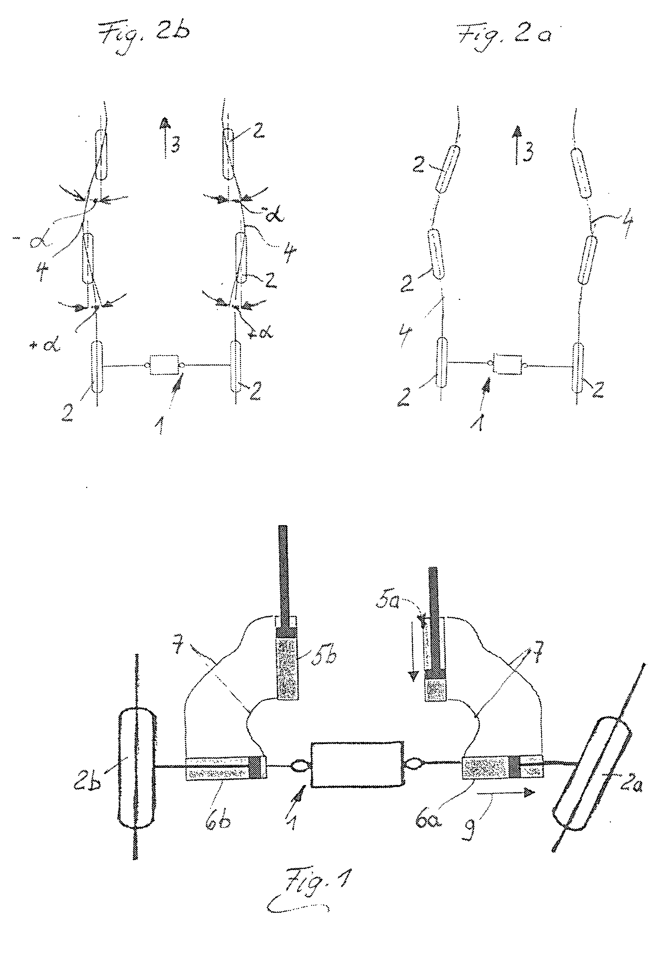

Hierzu wird auf die beigefügte Figur 2b verwiesen, in deren unterem Bereich stark vereinfacht eine Achse 1 eines zweispurigen Fahrzeugs mit zwei Rädern 2 bei Ansicht von oben auf die Fahrbahn dargestellt ist. In der Mitte dieser Figur 2b sind lediglich die beiden Räder 2 nach einem am rechten und am linken Rad 2 gleichen Einfedervorgang mit gegenüber dem unten dargestellten Zustand vergrößerter Spurweite dargestellt. Erfolgt ausgehend hiervon bei Weiterbewegung des Fahrzeugs in Fahrtrichtung 3 ein entsprechender entgegen gerichteter Einfedervorgang (nämlich dann ein "Ausfedern"), so wird die ursprüngliche Spurweite wieder hergestellt, wie der obere Bereich von Fig. 2b zeigt. Für den Übergang zwischen der größeren und der kleineren Spurweite ist dabei der Weg jedes Rades 2 in Form einer Kurve 4 dargestellt, woraus klar ersichtlich wird, dass - da mit dem Einfedervorgang (bzw. Ausfedervorgang) keine nennenswerte Veränderung hinsichtlich Vorspur bzw. Nachspur erfolgt - , sich bei jedem Übergang während des Einfederns (bzw. Ausfederns) ein relativ großer Schräglaufwinkel α einstellt, obwohl gemäß Pfeilrichtung 3 eine gerade Strecke (und keine Kurve) gefahren wurde. Wegen der hieraus insbesondere auch bei Geradeausfahrt resultierenden Querkräfte ist ein solches Verhalten von konventionellen Fahrzeugachsen nicht akzeptabel, weshalb eine solche Auslegung heutzutage nicht umgesetzt wird.

Hiermit soll nun aufgezeigt werden, wie an einem zweispurigen Fahrzeug mit den Merkmalen des Oberbegriffs des Anspruchs 1 größere Spurweitenänderungen, die sich als Folge von Einfedervorgängen ergeben, so gestaltet werden können, dass hierbei erheblich geringere Querkräfte als beim üblichen Stand der Technik in das Fahrwerk eingeleitet werden (= Aufgabe der vorliegenden Erfindung).

Die Lösung dieser Aufgabe ist dadurch gekennzeichnet, dass mit einem Einfedervorgang das betreffende Rad so gelenkt wird, dass die hieraus resultierende Spurweitenänderung im wesentlichen nachgefahren und somit ein ansonsten aus der Spurweitenänderung resultierender zusätzlicher Schräglaufwinkel minimiert wird.

Um das geschilderte Problem einer Spurweitenänderung (insbesondere bei Geradeausfahrt und bspw. verursacht aufgrund einer relativ hoch liegenden Rollachse) zu kompensieren, wird eine geeignete Lenkbewegung am jeweiligen Rad vorgeschlagen. Diese Lenkbewegung muss quasi die Spurweitenänderung "nachfahren", um keine nennenswerten zusätzlichen, aus der Spurweitenänderung resultierenden Querkräfte in das Fahrzeug zu leiten. Hierzu wird auf die beigefügte Figur 2a verwiesen, die in analoger Darstellung zur bereits erläuterten Figur 2b die Verhältnisse mit einem erfindungsgemäßen System zeigt. Die Räder 2 folgen aufgrund eines geeigneten Lenkeinschlags (d.h. aufgrund von Verschwenkung um die Vertikalachse) möglichst exakt der Kurve 4, die - wie anhand von Fig.2b erläutert wurde - Ursache der Spurweitenänderung ist.

Bei herkömmlichen Fahrzeug-Achsen bzw. Einzelrad-Aufhängungen sind zwar Eigenlenkbewegungen von Rädern in Abhängigkeit von Einfedervorgängen bekannt, jedoch wird dabei in Abhängigkeit vom jeweiligen Vertikal-Abstand zwischen Rad und Aufbau eine bestimmte Vorspur oder Nachspur eingestellt, und zwar durch die bzw. im Zusammenwirken der Elemente der Einzelradaufhängung selbst. Mit vorliegender Erfindung wird im Unterschied hierzu vorgeschlagen, bestimmte Lenkwinkel am jeweiligen zumindest geringfügig lenkbaren Rad in Zusammenhang mit einem Einfedervorgang an diesem Rad von einem für dieses Rad vorgesehenen Lenksystem gezielt einzustellen. Hierzu ist also zumindest ein geeigneter Lenkaktuator vorgesehen, wobei bevorzugt jedem lenkbaren Rad ein Lenkaktuator zur Erzeugung eines entsprechenden radindividuellen Lenkeinschlags zugeordnet ist.

Ein weiterer Unterschied zu herkömmlichen Fzg.-Achsen bzw. Einzelradaufhängungen mit radindividuellem Eigenlenkverhalten besteht bei der vorliegenden Erfindung darin, dass die vorgeschlagene Lenkwinkeleinstellung bevorzugt von der Geschwindigkeit des Einfedervorganges abhängig gestaltet wird. Im vollständig eingefedertem oder ausgefedertem Zustand ist also kein zusätzlicher Lenkwinkel erzeugt bzw. ein entsprechender Differenzlenkwinkel ist dann gleich Null, während bei Einzelrad-Aufhängungen mit Eigenlenkverhalten in diesen Zuständen eine sog. Vorspur bzw. Nachspur erzeugt wird.

Um eine vorgeschlagene, vorzugsweise einfedergeschwindigkeitsabhängige Lenkbewegung zu realisieren, kann bspw. auf elektronisch geregelte Einzelrad-Lenkaktuatoren zurückgegriffen werden, welche an einigen oder allen Rädern des Fahrzeugs unabhängig voneinander radindividuelle Lenkwinkel einstellen können. Es ist aber auch möglich, ein geeignetes vorrangig mechanisches Überlagerungssystem (bspw. mit Planetengetrieben) vorzusehen, welches radindividuell den vom Fzg.-Fahrer vorgegebenen Lenkwinkeln entsprechende Zusatz-Lenkwinkel überlagert.

Weiterhin wird eine im wesentlichen rein mechanische Realisierung einer einfedergeschwindigkeitsabhängigen Lenkbewegung vorgeschlagen, wonach das Eigenlenkverhalten eines Rades (mit Einzelradaufhängung) nicht nur - wie bislang üblich - kinematisch über Lenker an eine Einfederbewegung gekoppelt ist, sondern zusätzlich dynamisch hieran gekoppelt ist, und zwar bevorzugt an einen in der Radaufhängung vorgesehenen Dämpfer.
Übliche Vertikaldämpfungssysteme von Fahrzeugen erzeugen nämlich einfedergeschwindigkeitsabhängige Kräfte, d.h. die jeweilige Dämpfungskraft ist gleich null, wenn das Rad vollständig eingefedert oder ausgefedert in Ruhe ist. Somit kann also ein radindividueller Lenkaktuator über die Kräfte innerhalb eines dem jeweiligen Rad zugeordneten Dämpfers angesteuert werden.

Dies verdeutlicht die beigefügte Figur 1 auf das wesentliche abstrahiert, wobei die Räder 2a, 2b dieser Fzg.-Achse in Draufsicht (auf die Fahrbahn) dargestellt und die Dämpfer der jeweiligen Radaufhängung in eine Ebene parallel zur Fahrbahn gedreht dargestellt sind. Das linke Rad trägt die Bezugsziffer 2a und das rechte Rad die Bezugsziffer 2b; analog tragen die diesen Rädern zugeordneten Dämpfer die Bezugsziffern 5a bzw. 5b. Jedem Rad ist ein Lenkaktuator 6a bzw. 6b zugeordnet, die ähnlich wie die Dämpfer 5a, 5b als Kolben-Zylinder-Einheiten ausgebildet sind. Über Hydraulikleitungen 7 ist jeweils eine Kammer des Dämpfers 5a (bzw. 5b) eines Rades 2a (bzw. 2b) mit jeweils einer Kammer des diesem Rad 2a (bzw. 2b) zugeordneten Lenkaktuators 6a (bzw. 6b) geeignet verbunden. Wenn nun - wie in Fig.1 nur für das rechtsseitige Rad 2a dargestellt - aufgrund einer radindividuellen Einfederbewegung der Dämpferkolben des diesem Rad zugeordneten Dämpfers 5a gegenüber dessen Dämpferzylinder entsprechend Pfeil 8 verschoben wird, so wird die hieraus resultierende Kraft über die Hydraulikleitungen 7 einfeder-geschwindigkeitsabhängig auf den Kolben des diesem Rad 2a zugeordneten Lenkaktuators 6a derart übertragen, dass dieser durch eine Verlagerung gemäß Pfeilrichtung 9 das Rad 2a wie figürlich dargestellt um dessen Vertikalachse verschwenkt und somit lenkt. Dieses Lenken erfolgt dabei derart, dass sich der an diesem Rad mit einer Einfederbewegung und damit einstellenden Spurweitenänderung ergebende Schräglaufwinkel minimiert wird, so wie dies u.a. anhand von Fig.2a erläutert wurde, wobei selbstverständlich bei konkreter Umsetzung diverse Detailabstimmungen zu diesem System erforderlich sind, die aber von den jeweiligen geometrischen Verhältnissen abhängig sind.

Mit dem hier vorgeschlagenen System zum Erzeugen von Lenkwinkeln an zumindest geringfügig lenkbaren Rädern eines zweispurigen Fahrzeugs kann somit die Entstehung ungewollter Querkräfte aufgrund von Einfedervorgängen und daraus resultierenden Spurweitenänderungen weitgehend verhindert werden, so dass bspw. die Rollachse des Fahrzeugs höher als bislang üblich positioniert werden kann, obwohl hierdurch größere Spurweitenänderungen provoziert werden. Mit einer höheren Rollachse ergibt sich ein verbessertes Fahrerlebnis, weil das Fahrzeug nicht mehr wankt. Vorteilhafterweise stellt sich auch ein verbesserter Fahrkomfort ein, weil nunmehr eine weichere Achsaufhängung realisiert werden kann.

## Patentansprüche

1. System zum Erzeugen von Lenkwinkeln an zumindest geringfügig lenkbaren Rädern (2) eines zweispurigen Fahrzeugs, die über eine Einzelradaufhängung, welche bei Einfedervorgängen des Rades gegenüber dem Fahrzeug-Aufbau eine Änderung der Spurweite verursacht, geführt sind,
**dadurch gekennzeichnet, dass** mit einem Einfedervorgang das betreffende Rad (2) so gelenkt wird, dass die hieraus resultierende Spurweitenänderung im wesentlichen nachgefahren und somit ein ansonsten aus der Spurweitenänderung resultierender zusätzlicher Schräglaufwinkel (α) minimiert wird.

2. Lenksystem nach Anspruch 1,
**dadurch gekennzeichnet, dass** der Lenkwinkel in Abhängigkeit von der Geschwindigkeit des Einfedervorgangs eingestellt wird.

3. Lenksystem nach Anspruch 1 oder 2,
**dadurch gekennzeichnet, dass** jedem lenkbaren Rad (2a, 2b) ein Lenkaktuator (6a, 6b) zur Erzeugung eines entsprechenden radindividuellen Lenkeinschlags zugeordnet ist.

4. Lenksystem nach Anspruch 3,
**dadurch gekennzeichnet, dass** der radindividuelle Lenkaktuator (6a, 6b) über die Kräfte innerhalb eines dem jeweiligen Rad (2a, 2b) zugeordneten Dämpfers (5a, 5b) angesteuert wird.

## Claims

1. A system for producing steering angles at at least slightly steerable wheels (2) of a two-track vehicle, which are guided by an independent suspension, which causes a change in the track width in the event of deflection processes of the wheel relative to the vehicle body, **characterised in that** the relevant wheel (2) is steered during a deflection process in such a way that the resulting track width change is substantially followed, thus minimising an additional slip angle (α) otherwise resulting from the track width change.

2. A steering system according to claim 1, **characterised in that** the steering angle is adjusted as a function of the speed of the deflection process.

3. A steering system according to claim 1 or 2, **characterised in that** a steering actuator (6a, 6b) to produce a corresponding steering lock individual to the wheel is associated with each steerable wheel (2a, 2b).

4. A steering system according to claim 3, **characterised in that** the steering actuator (6a, 6b) individual to the wheel is activated by the forces inside a damper (5a, 5b) associated with the respective wheel (2a, 2b).

## Revendications

1. Système pour générer des angles de braquage de roues (2) au moins légèrement directrices d'un véhicule à deux voies, ces roues étant guidées par l'intermédiaire d'une suspension de roue indépendante occasionnant lors des mouvements de suspension de la roue par rapport à la carrosserie du véhicule une modification de la largeur de voie,
**caractérisé en ce que**
pour un mouvement de suspension, on guide la roue (2) concernée de façon que la variation de voie qui en résulte soit pratiquement suivie et l'on minimise ainsi l'angle de dérive α, supplémentaire qui en résulterait.

2. Système de braquage selon la revendication 1,
**caractérisé en ce que**
l'angle de braquage est réglé en fonction de la vitesse du mouvement de suspension.

3. Système de braquage selon la revendication 1 ou 2,
**caractérisé en ce que**
pour chaque roue directrice (2a, 2b), un actionneur de braquage (6a, 6b) génère un braquage de roue, individuel, correspondant.

4. Système de braquage selon la revendication 3,
**caractérisé en ce que**
l'actionneur individuel de roue de braquage (6a, 7b) est commandé par les efforts à l'intérieur des amortisseurs (5a, 5b) associés à chaque roue (2a, 2b).
